# FASCICULE DE BREVET EUROPEEN

(11) **EP 3 298 687 B1**
(45) Date de publication et mention de la délivrance du brevet: **13.03.2019**
(21) Numéro de dépôt: 16731219.8
(22) Date de dépôt: 20.05.2016
(51) Int. Cl.: H02P 27/08

(54) **PROCÉDÉ ET DISPOSITIF DE COMMANDE D'UNE MACHINE ÉLECTRIQUE TOURNANTE PAR DES SIGNAUX MLI, ET MACHINE ÉLECTRIQUE DE VÉHICULE AUTOMOBILE CORRESPONDANTE**
VERFAHREN UND VORRICHTUNG ZUR STEUERUNG EINER ELEKTRISCHEN ROTATIONSMASCHINE DURCH PWM-SIGNALE UND ENTSPRECHENDE ELEKTRISCHE MASCHINE EINES KRAFTFAHRZEUGS
METHOD AND DEVICE FOR CONTROLLING A ROTATING ELECTRICAL MACHINE BY PWM SIGNALS, AND CORRESPONDING ELECTRICAL MACHINE OF A MOTOR VEHICLE

(30) Priorité: 21.05.2015 FR 1554567
(43) Date de publication de la demande: 28.03.2018
(73) Titulaire: Valeo Equipements Electriques Moteur, 94046 Créteil Cedex (FR)
(72) Inventeur: MAKNI, Zaatar, 94046 Créteil Cedex (FR)
(74) Mandataire: Metz, Gaëlle
(86) Numéro de dépôt international: PCT/FR2016/051203
(87) Numéro de publication internationale: WO 2016/185150

(56) Documents cités:
- EP-A1- 0 092 937
- FR-A1- 2 895 597
- US-A1- 2005 069 301
- US-A1- 2014 001 992
- US-A1- 2014 361 720

## Description

### DOMAINE TECHNIQUE DE L'INVENTION.

La présente invention concerne un procédé et un dispositif de commande d'une machine électrique par des signaux MLI. L'invention concerne aussi une machine électrique de véhicule automobile comportant un tel dispositif.

### ARRIERE PLAN TECHNOLOGIQUE DE L'INVENTION.

Le contexte général de l'invention est celui de la commande des machines électriques alimentées par un onduleur.

Il est bien connu qu'un onduleur convertit une tension continue en une tension alternative avec une amplitude et une fréquence déterminées. Il s'agit d'un dispositif électronique comprenant des commutateurs électroniques de type MOSFET (acronyme de "Metal-Oxyde Semiconductor Field Effect Transistor" en terminologie anglaise, c'est-à-dire "Transistor à Effet de Champ à Semiconducteur Métal-Oxyde") ou IGBT (acronyme de "Insulated Gate Bipolar Transistor", c'est-à-dire "Transistor Bipolaire à Grille Isolée"). La forme d'onde alternative est obtenue en commandant une succession de commutations. La source continue est modulée sur le principe d'une modulation en largeur d'impulsion (MLI) d'un signal de manière à obtenir la fréquence et l'amplitude désirées.

Le signal MLI est un signal alternatif discret calculé par un algorithme de commande. Sa période de discrétisation dépend d'une fréquence d'échantillonnage de la commande. Dans la mesure où le signal MLI est la base de la modulation de tension, sa fréquence d'échantillonnage est inévitablement présente dans le spectre de la tension alternative produite par l'onduleur. Plusieurs problèmes sont liés à ces harmoniques tels que la compatibilité électromagnétique (CEM) ou le bruit vibratoire.

Dans ce cadre, l'invention vise à réduire l'énergie contenue dans les harmoniques du signal MLI. Pour ce faire, une période fondamentale du signal MLI est rendue variable. L'énergie des harmoniques est alors étalée dans la bande de fréquence correspondant à cette variation de période fondamentale.

Un tel procédé est déjà connu de la société VALEO ELECTRICAL SYSTEMS qui le décrit dans sa demande de brevet américain US20050069301 pour une application à un moteur électrique à courant continu, dont la vitesse est contrôlée par un courant d'alimentation présentant un rapport cyclique variable, de manière à réduire des parasites induits dans un poste de radio d'un véhicule.

Conventionnellement ce procédé est appliqué à des commandes par signaux MLI de machines électriques plus complexes qu'un moteur électrique à courant continu, telles que des machine électriques tournantes synchrones polyphasées.

Pour ce type de machines, l'onduleur doit alimenter les phases d'un stator de manière à produire un champ magnétique tournant entraînant un rotor.

Un procédé dit de "Modulation en Largeur d'Impulsion Vectorielle " ou SVM (acronyme de "Space Vector Modulation" en terminologie anglaise) permet de produire les signaux MLI alimentant les phases en fonction d'une vitesse et d'un couple requis.

Ces signaux MLI sont le plus souvent générés par des algorithmes élaborés, exécutés par un microprocesseur ou un microcontrôleur, tels que décrits par exemple dans la demande de brevet français FR2895597 au nom de la société VALEO EQUIPEMENTS ELECTRIQUES MOTEURS.

Dans le procédé connu pour obtenir des signaux MLI échantillonnés à une fréquence variable, les calculs relatifs à la commande MLI vectorielle sont effectués à cette fréquence variable, ce qui présente un inconvénient car il peut être nécessaire que tous les algorithmes de commande soient exécutés à cette fréquence variable.

### DESCRIPTION GENERALE DE L'INVENTION.

La présente invention propose donc un procédé pour pallier cet inconvénient.

Elle a précisément pour objet un procédé de commande d'une machine électrique par des signaux MLI du type de ceux où ces signaux sont échantillonnés à une fréquence d'échantillonnage variable.

Selon le procédé de l'invention, on effectue successivement:
- un calcul des signaux MLI à une fréquence de calcul fixe prédéterminée;
- une écriture des signaux MLI dans un registre;
- une relecture des signaux MLI dans le registre à la fréquence d'échantillonnage.

Dans le procédé de commande d'une machine électrique par des signaux MLI selon l'invention, ce calcul est avantageusement une détermination des vecteurs de commande d'une modulation en largeur d'impulsion vectorielle.

L'invention concerne également un dispositif de commande d'une machine électrique par des signaux MLI apte à la mise en oeuvre du procédé décrit précédemment.

Le dispositif dont il s'agit est du type de ceux comportant une unité électronique de contrôle générant les signaux MLI à une fréquence d'échantillonnage variable.

Selon l'invention, cette unité électronique de contrôle comprend:
- une première horloge à une fréquence de calcul fixe prédéterminée;
- une unité de calcul calculant les signaux MLI à la fréquence de calcul;
- un registre;
- des moyens d'écriture des signaux MLI dans le registre;
- une seconde horloge à une fréquence d'échantillonnage variable;
- des moyens de relecture des signaux MLI dans le registre à la fréquence d'échantillonnage.

Le dispositif de commande d'une machine électrique par des signaux MLI selon l'invention comprend en outre avantageusement un onduleur piloté par l'unité électronique de contrôle apte à être relié à un réseau électrique de bord alimenté par une batterie et destiné à être connecté à des enroulements de phases de la machine électrique.

Selon l'invention, l'unité de calcul exécute avantageusement à la fréquence de calcul au moins un algorithme de détermination des vecteurs de commande d'une modulation en largeur d'impulsion vectorielle destinés à contrôler la machine électrique.

On tirera bénéfice d'une machine électrique de véhicule automobile, comprenant le dispositif de commande décrit précédemment. De préférence, cette machine électrique sera une machine électrique tournante synchrone polyphasée.

L'invention vise aussi une mémoire informatique apte à être implémentée dans le dispositif de commande décrit ci-dessus, comportant un code informatique représentatif du procédé de commande d'une machine électrique par des signaux MLI selon l'invention.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est un schéma électrique simplifié d'un dispositif de commande par des signaux MLI d'une machine électrique triphasée reliée à un onduleur selon l'invention.
Les **Figures 2a et 2b** sont respectivement des spectres d'une tension de sortie de l'onduleur montré sur la **Figure 1****,** sans et avec la mise en oeuvre du procédé de commande selon l'invention.

### DESCRIPTION DES MODES DE REALISATION PREFERES DE L'INVENTION.

Une machine électrique 1 de véhicule automobile est généralement une machine électrique tournante polyphasée alimentée à partir d'une tension d'alimentation B+ du réseau électrique de bord 2, quand elle fonctionne en moteur, ou fournissant de l'énergie électrique à ce réseau 2 quand elle fonctionne en alternateur. Un convertisseur CC/CA réversible 3 connecté au stator 4 permet de réaliser ces deux modes de fonctionnement.

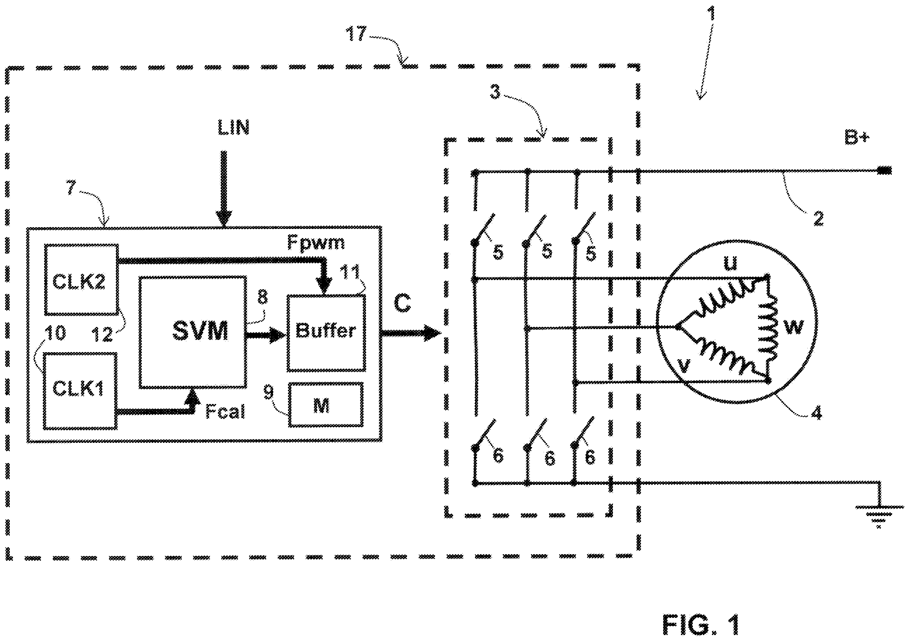

Comme le représente schématiquement la **Figure 1** (dans le cas d'une machine triphasée par simplification), le convertisseur CC/CA réversible 3 comporte des éléments de commutation à semi-conducteur 5, 6, le plus souvent des transistors de puissance de technologie MOSFET, organisés en pont 5, 6.

Chaque bras comporte un premier transistor de puissance 5 reliant un enroulement de phase u, v, w à la tension d'alimentation B+ (transistor dit "high side" 5) quand il est passant, et un second transistor de puissance 6 reliant cet enroulement de phase u, v, w à une masse (transistor dit "low side") quand il est passant.

Ces éléments de commutation 5, 6, sont pilotés par une unité électronique de contrôle 7 de manière à ce que le convertisseur 3 constitue un redresseur synchrone pour un fonctionnement en alternateur de l'alterno-démarreur, et constitue un générateur polyphasé, ou onduleur, créant dans le stator 4 un champ tournant pour un fonctionnement en moteur.

Pour créer ce champ tournant, on applique sur les phases u, v, w des tensions appropriées en pilotant l'onduleur 3 de manière à ce qu'il fournisse des signaux modulés en largeur d'impulsion (MLI vectorielle) correspondants C.

Selon un procédé bien connu de l'état de la technique, la génération de ces signaux MLI est basée sur l'exécution par une unité de calcul 8 de l'unité de contrôle 7 d'un microprogramme stocké dans une mémoire 9 consistant essentiellement à comparer des rampes périodiques aux niveaux de signaux de référence, généralement sinusoïdaux, correspondant à une modulation des courants de phases nécessaire pour créer un champ tournant dans le stator 4.

Selon le procédé de l'invention, on commande l'onduleur 3 de manière à limiter les harmoniques des tensions de sortie V1 de l'onduleur 3, sans faire varier la période de calcul 1/Fcal.

Pour ce faire, l'unité électronique de contrôle 7 comprend une première horloge 10 à la fréquence de calcul Fcal fixe (de préférence égale à 16 KHz) déterminant un cycle de calcul de l'unité de calcul 8.

Les signaux MLI calculés sont écrits dans un registre 11 de l'unité électronique de contrôle 7, avant d'être relus dans le registre 11 sous le contrôle d'une seconde horloge 12 de l'unité électronique de contrôle 7 à une fréquence d'échantillonnage Fpwm variable, pour piloter l'onduleur 3.

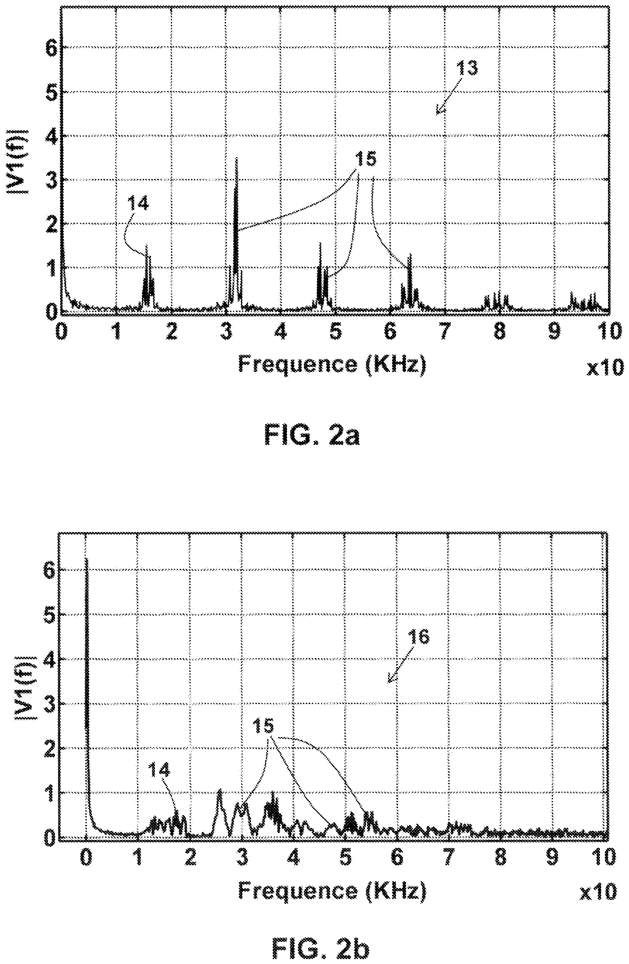

La **Figure 2a** est un premier spectre 13 d'une tension de sortie V1 de l'onduleur 3 quand la fréquence de calcul Fcal et la fréquence d'échantillonnage Fpwm sont fixes, égales à 16 KHz, c'est-à-dire dans le cas où le procédé selon l'invention n'est pas mis en oeuvre. Ce premier spectre 13 montre bien une raie fondamentale 14 à 16 KHz et les nombreux harmoniques 15 de grande amplitude.

La **Figure 2b** est un second spectre 16 de la tension de sortie V1 de l'onduleur 3 quand la fréquence de calcul Fcal est fixe, égale à 16 KHz, et la fréquence d'échantillonnage Fpwm est variable, comprise entre 13 KHz et 19 KHz, c'est-à-dire dans le cas où le procédé selon l'invention est mis en oeuvre. Ce second spectre 16 montre que la raie fondamentale 14 est moins perceptible et que tous les autres harmoniques 15 sont atténués et étalés.

Le procédé permet donc de réduire le bruit vibratoire audible et d'améliorer la compatibilité électromagnétique de la machine électrique 1.

Des instructions représentatives du procédé selon l'invention sont stockées dans la mémoire 9 de l'unité électronique de contrôle 7. Elles comprennent des instructions de calcul de vecteurs de commande de la MLI vectorielle à la fréquence de calcul Fcal et des instructions de chargement du registre 11 avec des valeurs de MLI résultant de ce calcul. Ces instructions représentatives du procédé comprennent également des instructions de lecture des valeurs MLI dans le registre 11 à la fréquence d'échantillonnage.

L'unité électronique de contrôle 7 est formée avantageusement par un microcontrôleur à double base de temps 10, 12.

Comme il va de soi, l'invention ne se limite pas aux seuls modes d'exécution particuliers décrits ci-dessus.

Dans le domaine automobile, l'invention trouvera de nombreuses applications dans la commande des moteurs électriques. Par exemple, dans la commande des moteurs électriques des dispositifs d'essuie-glace ou des machines électriques tournantes réversibles, telles qu'un alterno-démarreur, lorsque celles-ci fonctionnent en mode moteur. Le procédé selon l'invention pourra s'appliquer à une machine électrique présentant un plus grand nombre de phases u, v, w que la machine 1 décrite ici en référence à la **Figure 1****.**

Le procédé pourrait également s'appliquer à un moteur à courant continu alimenté par une tension MLI pour contrôler sa vitesse,.

Les types de composants électroniques ne sont indiqués qu'à titre d'exemple, et pourront être remplacés autant que de besoin par d'autres composants ayant une même fonction, notamment l'unité électronique de calcul 7 pourra être formée par un microprocesseur, un ASIC (acronyme de "Application Specific Integrated Circuit" en terminologie anglaise, c'est-à-dire "Circuit Intégré Spécifique à une Application"), ou même en partie par une logique câblée.

Les valeurs numériques de la fréquence de calcul Fcal et de la fréquence d'échantillonnage Fpwm ne sont aussi données qu'à titre d'exemple. D'autres valeurs numériques seront utilisées en fonction des caractéristiques électromécaniques des machines électriques 1 à commander.

L'invention embrasse donc toutes les variantes possibles de réalisation qui resteraient dans le cadre défini par les revendications ci-après.

## Revendications

1. Procédé de commande d'une machine électrique (1) par des signaux MLI (C) du type de ceux où lesdits signaux MLI (C) sont échantillonnés à une fréquence d'échantillonnage variable (Fpwm), **caractérisé en ce que** l'on effectue successivement:
- un calcul desdits signaux MLI (C) à une fréquence de calcul (Fcal) fixe prédéterminée;
- une écriture desdits signaux MLI (C) dans un registre (11);
- une relecture desdits signaux MLI (C) dans ledit registre (11) à ladite fréquence d'échantillonnage (Fpwm).

2. Procédé de commande d'une machine électrique par des signaux MLI (C) selon la revendication 1 précédente, **caractérisé en ce que** ledit calcul est une détermination des vecteurs de commande d'une modulation en largeur d'impulsion vectorielle.

3. Procédé de commande d'une machine électrique par des signaux MLI (C) selon la revendication 1 ou 2 précédente, **caractérisé en ce que** ladite fréquence de calcul (Fcal) est sensiblement égale à 16 KHz et ladite fréquence d'échantillonnage (Fpwm) est comprise entre 13 KHz et 19 KHz.

4. Dispositif de commande (17) d'une machine électrique (1) par des signaux MLI (C) apte à la mise en oeuvre du procédé selon l'une quelconque des revendications 1 à 3 précédentes, du type de ceux comportant une unité électronique de contrôle (7) générant lesdits signaux MLI (C) à une fréquence d'échantillonnage (Fpwm) variable, **caractérisé en ce que** ladite unité électronique de contrôle (7) comprend:
- une première horloge (10) à une fréquence de calcul (Fcal) fixe prédéterminée;
- une unité de calcul (8) calculant lesdits signaux MLI (C) à ladite fréquence de calcul (Fcal);
- un registre (11);
- des moyens d'écriture desdits signaux MLI (C) dans ledit registre (11);
- une seconde horloge (12) à une fréquence d'échantillonnage (Fpwm) variable;
- des moyens de relecture desdits signaux MLI (C) dans ledit registre (11) à ladite fréquence d'échantillonnage (Fpwm).

5. Dispositif de commande (17) d'une machine électrique (1) par des signaux MLI (C) selon la revendication 4 précédente, **caractérisé en ce qu'**il comprend en outre un onduleur (3) piloté par ladite unité électronique de contrôle (7) apte à être relié à un réseau électrique de bord (2) alimenté par une batterie (Batt+) et destiné à être connecté à des enroulements de phases (u, v, w) de ladite machine électrique (1).

6. Dispositif de commande (17) d'une machine électrique (1) par des signaux MLI (C) selon la revendication 5 précédente, **caractérisé en ce que** ladite unité de calcul (8) exécute à ladite fréquence de calcul (Fcal) au moins un algorithme de détermination des vecteurs de commande d'une modulation en largeur d'impulsion vectorielle destinés à contrôler ladite machine électrique (1).

7. Dispositif de commande (17) d'une machine électrique par des signaux MLI (C) selon l'une quelconque des revendications 4 à 6 précédentes, **caractérisé en ce que** ladite fréquence de calcul (Fcal) est sensiblement égale à 16 KHz et ladite fréquence d'échantillonnage (Fpwm) est comprise entre 13 KHz et 19 KHz.

8. Machine électrique (1) de véhicule automobile, **caractérisée en ce qu'**elle comprend un dispositif de commande (17) selon l'une quelconque des revendications 4 à 7 précédentes.

9. Machine électrique (1) de véhicule automobile selon la revendication 8 précédente, **caractérisée en ce qu'**elle est du type d'une machine électrique tournante synchrone polyphasée.

10. Mémoire informatique (9) apte à être implémentée dans un dispositif de commande (17) d'une machine électrique par des signaux MLI (C) selon l'une quelconque des revendications 4 à 7 précédentes, **caractérisée en ce qu'**elle comporte un code informatique représentatif du procédé selon l'une quelconque des revendications 1 à 3 précédentes.

## Patentansprüche

1. Verfahren zur Steuerung einer elektrischen Maschine (1) durch PWM-Signale (C) des Typs jener, bei denen die PWM-Signale (C) mit einer variablen Abtastfrequenz (Fpwm) abgetastet werden, **dadurch gekennzeichnet, dass** nacheinander Folgendes durchgeführt wird:
- eine Berechnung der PWM-Signale (C) mit einer vorbestimmten festen Berechnungsfrequenz (Fcal);
- ein Schreibvorgang der PWM-Signale (C) in ein Register (11);
- ein Wiedereinlesen der PWM-Signale (C) in das Register (11) mit der Abtastfrequenz (Fpwm).

2. Verfahren zur Steuerung einer elektrischen Maschine durch PWM-Signale (C) nach dem vorhergehenden Anspruch 1, **dadurch gekennzeichnet, dass** die Berechnung eine Bestimmung der Steuervektoren einer vektoriellen Pulsweitenmodulation ist.

3. Verfahren zur Steuerung einer elektrischen Maschine durch PWM-Signale (C) nach dem vorhergehenden Anspruch 1 oder 2, **dadurch gekennzeichnet, dass** die Berechnungsfrequenz (Fcal) im Wesentlichen gleich 16 KHz ist und die Abtastfrequenz (Fpwm) zwischen 13 KHz und 19 KHz liegt.

4. Einrichtung zur Steuerung (17) einer elektrischen Maschine (1) durch PWM-Signale (C), die für die Umsetzung des Verfahrens nach einem der vorhergehenden Ansprüche 1 bis 3 geeignet ist, des Typs jener, die eine elektronische Steuerungseinheit (7) aufweisen, die die PWM-Signale (C) mit einer variablen Abtastfrequenz (Fpwm) erzeugt, **dadurch gekennzeichnet, dass** die elektronische Steuerungseinheit (7) Folgendes umfasst:
- einen ersten Taktgeber (10) mit einer vorbestimmten festen Berechnungsfrequenz (Fcal);
- eine Berechnungseinheit (8), die die PWM-Signale (C) mit der Berechnungsfrequenz (Fcal) berechnet;
- ein Register (11);
- Mittel zum Schreiben der PWM-Signale (C) in das Register (11);
- einen zweiten Taktgeber (12) mit einer variablen Abtastfrequenz (Fpwm);
- Mittel zum Wiedereinlesen der PWM-Signale (C) in das Register (11) mit der Abtastfrequenz (Fpwm).

5. Einrichtung zur Steuerung (17) einer elektrischen Maschine (1) durch PWM-Signale (C) nach dem vorhergehenden Anspruch 4, **dadurch gekennzeichnet, dass** sie ferner einen Wechselrichter (3) umfasst, der von der elektronischen Steuerungseinheit (7) gesteuert wird, der dafür geeignet ist, mit einem elektrischen Bordnetz (2) verbunden zu sein, das von einer Batterie (Batt+) versorgt wird, und dazu bestimmt ist, mit Phasenwicklungen (u, v, w) der elektrischen Maschine (1) verbunden zu sein.

6. Einrichtung zur Steuerung (17) einer elektrischen Maschine (1) durch PWM-Signale (C) nach dem vorhergehenden Anspruch 5, **dadurch gekennzeichnet, dass** die Berechnungseinheit (8) mindestens einen Algorithmus zur Bestimmung der Steuervektoren einer vektoriellen Pulsweitenmodulation, die dazu bestimmt sind, die elektrische Maschine (1) zu steuern, mit der Berechnungsfrequenz (Fcal) ausführt.

7. Vorrichtung zur Steuerung (17) einer elektrischen Maschine durch PWM-Signale (C) nach einem der vorhergehenden Ansprüche 4 bis 6, **dadurch gekennzeichnet, dass** die Berechnungsfrequenz (Fcal) im Wesentlichen gleich 16 KHz ist und die Abtastfrequenz (Fpwm) zwischen 13 KHz und 19 KHz liegt.

8. Elektrische Maschine (1) eines Kraftfahrzeug, **dadurch gekennzeichnet, dass** sie eine Einrichtung zur Steuerung (17) nach einem der vorhergehenden Ansprüche 4 bis 7 umfasst.

9. Elektrische Maschine (1) eines Kraftfahrzeug nach dem vorhergehenden Anspruch 8, **dadurch gekennzeichnet, dass** sie vom Typ einer drehenden elektrischen Mehrphasen-Synchronmaschine ist.

10. Computerspeicher (9), der geeignet ist, in einer Einrichtung zur Steuerung (17) einer elektrischen Maschine durch PWM-Signale (C) nach einem der vorhergehenden Ansprüche 4 bis 7 implementiert zu sein, **dadurch gekennzeichnet, dass** er einen Computercode umfasst, der für das Verfahren nach einem der vorhergehenden Ansprüche 1 bis 3 repräsentativ ist.

## Claims

1. Method for controlling an electrical machine (1) using PWM signals (C) of the type in which said PWM signals (C) are sampled at a variable sampling frequency (Fpwm), **characterized in that** the following is carried out in succession:
- calculating said PWM signals (C) at a predetermined fixed calculating frequency (Fcal);
- writing said PWM signals (C) to a register (11);
- rereading said PWM signals (C) in said register (11) at said sampling frequency (Fpwm).

2. Method for controlling an electrical machine using PWM signals (C) according to preceding Claim 1, **characterized in that** said calculation is a determination of the control vectors for a space vector modulation.

3. Method for controlling an electrical machine using PWM signals (C) according to preceding Claim 1 or 2, **characterized in that** said calculating frequency (Fcal) is substantially equal to 16 KHz and said sampling frequency (Fpwm) is between 13 KHz and 19 KHz.

4. Device (17) for controlling an electrical machine (1) using PWM signals (C), said device being able to implement the method according to any one of preceding Claims 1 to 3, of the type including an electronic control unit (7) that generates said PWM signals (C) at a variable sampling frequency (Fpwm), **characterized in that** said electronic control unit (7) comprises:
- a first clock (10) at a predetermined fixed calculating frequency (Fcal);
- a calculating unit (8) calculating said PWM signals (C) at said calculating frequency (Fcal);
- a register (11);
- means for writing said PWM signals (C) to said register (11) ;
- a second clock (12) at a variable sampling frequency (Fpwm);
- means for rereading said PWM signals (C) in said register (11) at said sampling frequency (Fpwm).

5. Device (17) for controlling an electrical machine (1) using PWM signals (C) according to preceding Claim 4, **characterized in that** it furthermore comprises an inverter (3) driven by said electronic control unit (7) and able to be linked to an on-board electrical network (2) supplied by a battery (Batt+) and intended to be connected to phase windings (u, v, w) of said electrical machine (1).

6. Device (17) for controlling an electrical machine (1) using PWM signals (C) according to preceding Claim 5, **characterized in that** said calculating unit (8) executes, at said calculating frequency (Fcal), at least one algorithm for determining the control vectors for a space vector modulation that are intended to control said electrical machine (1).

7. Device (17) for controlling an electrical machine using PWM signals (C) according to any one of preceding Claims 4 to 6, **characterized in that** said calculating frequency (Fcal) is substantially equal to 16 KHz and said sampling frequency (Fpwm) is between 13 KHz and 19 KHz.

8. Motor vehicle electrical machine (1), **characterized in that** it comprises a control device (17) according to any one of preceding Claims 4 to 7.

9. Motor vehicle electrical machine (1) according to preceding Claim 8, **characterized in that** it is of the polyphase synchronous rotating electrical machine type.

10. Computer memory (9) able to be implemented in a device (17) for controlling an electrical machine using PWM signals (C) according to any one of preceding Claims 4 to 7, **characterized in that** it includes a computer code representative of the method according to any one of preceding Claims 1 to 3.
